(19) Europäisches Patentamt
European Patent Office
Office européen des brevets

(11) **EP 2 184 824 B1**

(12) **EUROPÄISCHE PATENTSCHRIFT**

(45) Veröffentlichungstag und Bekanntmachung des Hinweises auf die Patenterteilung:
**01.02.2012 Patentblatt 2012/05**

(51) Int Cl.:
*F16L 3/223* *(2006.01)*   *H02G 3/04* *(2006.01)*
*H02G 9/06* *(2006.01)*

(21) Anmeldenummer: **08019355.0**

(22) Anmeldetag: **05.11.2008**

(54) **Verfahren zum Herstellen eines Rohrpaketes und zugehöriges Rohrpaket**

Method for producing a pipe package and associated pipe package

Procédé destiné à la fabrication d'un paquet de tuyaux et paquet de tuyaux correspondant

(84) Benannte Vertragsstaaten:
**AT CH DE LI**

(43) Veröffentlichungstag der Anmeldung:
**12.05.2010 Patentblatt 2010/19**

(73) Patentinhaber: **Dipl.-Ing. Dr. Ernst Vogelsang GmbH & Co. KG**
**D-45699 Herten (DE)**

(72) Erfinder: **Vogelsang, Horst**
**45699 Herten (DE)**

(74) Vertreter: **Nunnenkamp, Jörg et al**
**Andrejewski - Honke**
**Patent- und Rechtsanwälte**
**An der Reichsbank 8**
**45127 Essen (DE)**

(56) Entgegenhaltungen:
**DE-A1- 2 701 209    DE-U1- 20 102 174**
**DE-U1- 29 721 044    US-A- 1 799 672**
**US-A- 1 818 922**

EP 2 184 824 B1

**Beschreibung**

Die Erfindung betrifft ein Verfahren zur Herstellung eines Rohrpaketes aus einzelnen Rohren, insbesondere Kabelschutzrohren, wonach die Rohre längs verlaufend mittels zumindest eines zwischengeschalteten Abstandhalters verbindungsfrei zusammengefasst und zusätzlich außenumfangseitig umreift werden.

Rohre, insbesondere Kabelschutzrohre, werden überwiegend im Boden verlegt und dienen beispielsweise zur Aufnahme von Telefonkabeln, Fernsehkabeln, Stromkabeln oder dergleichen. Sie können aber auch für die Gas- und Wasserversorgung eingesetzt werden.

Es ist bereits bekannt, sogenannte Rohrverbunde aus Kabelschutzrohren herzustellen, wie dies die DE 298 07 441 U1 oder auch die DE 297 24 702 U1 beschreiben. In beiden Fällen ist letztlich eine die Rohre außenumfangsseitig umschließende Deckschicht realisiert, um den Rohrverbund zu erhalten. Ähnlich geht die DE 33 08 482 A1 vor.

Daneben, ist es aus der Praxis bekannt, Rohrpakete, also Zusammenstellungen aus Rohren, die im Gegensatz zum Rohrverbund nicht miteinander gekoppelt sind, am Einbauort herzustellen. Hierzu sind Abstandhalter vorgesehen, die für eine gewisse gegenseitige Fixierung der Rohre sorgen. Gleichwohl ist es am Einbauort erforderlich, den zwischen den Abstandklemmen bzw. Abstandhaltern befindlichen Freiraum mit Sand zu verfüllen. Meistens muss der Sand zudem noch verdichtet werden, um beispielsweise nach der Verlegung der Rohre ein Überfahren der Oberfläche mit LKW's oder dergleichen zu gewährleisten.

Die bisher beschriebene Vorgehensweise erfordert also zwangsläufig, dass der zwischen den Rohren verbleibende Freiraum oder Zwischenraum mit Sand oder einem anderen Füllmittel aufgefüllt wird und das Rohrpaket insgesamt eine Stabilisierung erfährt, damit nicht etwaige verbleibende Hohlräume zu einer Beschädigung bei einer Druckbelastung an der Oberfläche führen. Das Verfüllen mit Feinsand im Beispielfall sowie das zugehörige Verdichten erfordern jedoch nicht nur ergänzenden Materialeinsatz, sondern sind insbesondere vom Arbeitsaufwand her nachteilig.

Hieran ändert auch der gattungsbildende Stand der Technik entsprechend der US 1 818 922 nichts. Denn das dortige Rohrpaket wird mittels Abstandhaltern gebildet, die vorteilhaft aus Beton gefertigt sind. Ähnlich geht die US 1 799 672 vor.

Sofern im Rahmen der DE 27 01 209 ein Verfahren zum Verlegen unterirdischer Kabelstränge zur Sprache kommt, werden die einzelnen Kabelrohre zu einem Bündel zusammengefasst und miteinander verbunden. Hierzu sind unter anderem Kunststoffbahnen vorgesehen, welche verhindern sollen, dass Aufschuttgut in Zwischenräume zwischen die Rohre eindringen kann.

Schlussendlich befasst sich die DE 201 02 174 U1 mit einer Befestigungsvorrichtung für Rohre, die durch eine Vielzahl von einander anschließenden Segmenten gekennzeichnet ist. Die Segmente sind aus einem wärmeisolierenden Material gebildete Abstandhalter. An einer Oberseite der Segmente finden sich Mittel zum Fixieren der sich in Abstandhalterlängsrichtung erstreckenden Rohre.

Der Erfindung liegt das technische Problem zugrunde, ein derartiges Verfahren zum Herstellen eines Rohrpaketes aus einzelnen Rohren, insbesondere Kabelschutzrohren, so weiter zu entwickeln, dass die Kosten für die Herstellung und insbesondere Verlegung des Rohrpaketes gegenüber bisherigen Vorgehensweisen deutlich verringert sind.

Zur Lösung dieser Aufgabenstellung ist ein gattungsgemäßes Verfahren im Rahmen der Erfindung dadurch gekennzeichnet, dass der räumlich ausgedehnte Abstandhalter aus einem aufgeschäumten thermoplastischen Kunststoff hergestellt wird und einen zwischen den Rohren verbleibenden Zwischenraum in Längsrichtung und Querrichtung im Wesentlichen vollständig ausfüllt.

Erfindungsgemäß kommt also ein räumlich ausgedehnter Abstandhalter im Gegensatz zu den bisher eingesetzten Abstandsstegen bzw. Abstandklemmen zum Einsatz. Tatsächlich füllt dieser erfindungsgemäße Abstandhalter den zwischen den Rohren verbleibenden Zwischenraum in Längs- und Querrichtung im Wesentlichen aus. Hierunter ist im Rahmen der Erfindung zu verstehen, dass der Zwischenraum jedenfalls so weit mit Hilfe des räumlich ausgedehnten Abstandhalters oder der mehreren Abstandhalter ausgefüllt wird, dass etwaige verbleibende Hohlräume keine zusätzliche Füllung erfordern. D.h., die Stabilität des im Rahmen der Erfindung hergestellten Rohrpaketes entspricht im Wesentlichen derjenigen, wie sie zuvor mit der Sandfüllung in dem Zwischenraum bzw. in den mehreren Zwischenräumen erreicht wurde. Das gilt insbesondere für Kraftbelastungen in Querrichtung des Rohrpaketes.

Denn die Rohre bzw. das Rohrpaket werden im Allgemeinen längs verlaufend im Erdboden verlegt. Als Folge hiervon müssen insbesondere Belastungen in Querrichtung aufgenommen werden, wenn beispielsweise die Verlegung unterhalb einer Straße, einer Schienentrasse etc. erfolgt. Mit den erfindungsgemäß eingesetzten und praktisch den gesamten Zwischenraum zwischen den Rohren in Längs- und Querrichtung füllenden Abstandhaltern gelingt es nun, dass solche Querkräfte problemlos aufgenommen werden können, ohne dass die Rohre ihre gegenseitige Position zueinander verändern. Als Folge hiervon wird die Oberfläche auch nicht beeinträchtigt, sind insbesondere keine Löcher, abgesackte Bereiche etc. zu beobachten. Tatsächlich führt eine (übermäßige) Kraftbeaufschlagung des erfindungsgemäßen Rohrpaketes in Querrichtung zu seiner Längserstreckung immer zuerst dazu, dass das jeweils beaufschlagte Rohr kollabiert, bevor der Abstandhalter als solcher eine Beschädigung erfährt bzw. ein oder mehrere Rohre des Rohrpaketes ausweichen.

In diesem Zusammenhang hat es sich bewährt, wenn der Abstandhalter aus einer frei formbaren Masse gefertigt wird. Dabei greift die Erfindung vorteilhaft auf einen Kunststoff zurück, insbesondere einen amorphen oder teilkristallinen Thermoplast.

Der Abstandhalter ist regelmäßig gegenüber Wasser, aber auch im Vergleich zu Laugen und sogar Säuren beständig, was für den beschriebenen Einsatzzweck vonnöten ist. Außerdem verfügt der Abstandhalter meist über eine geringe Wärmeleitfähigkeit, um die einzelnen zum Rohrpaket zusammengefassten Rohre thermisch voneinander zu isolieren. Diese thermische Isolierung wird noch dadurch gesteigert, dass die Rohre weder untereinander noch mit dem Abstandhalter oder der Umreifung eine (feste) Verbindung eingehen. Vielmehr stellt das Rohrpaket eine wieder lösbare Zusammenstellung der Rohre dar, die beispielsweise durch Trennen der Umreifung wieder aufgehoben werden kann.

Die im Rohrpaket unverändert gegebene Beweglichkeit der einzelnen Rohre zueinander und im Vergleich zu dem einen oder den mehreren Abstandhaltern ist aus mehreren Gründen besonders vorteilhaft. Zunächst einmal bleiben die Rohre flexibel, so dass das Rohrpaket unschwer Biegungen in einer Baugrube folgen kann. Außerdem lassen sich die Rohre innerhalb des Rohrpaketes zumindest teilweise in axialer Richtung bewegen, was für die Verbindung einzelner Rohre untereinander mit Hilfe einer Muffe, insbesondere Steckmuffe von Bedeutung ist. Denn beim Herstellen einer solchen Muffenverbindung werden die beiden zu verbindenden Rohre meistens beidseitig bis zum Erreichen eines Anschlags im Innern der Muffe gegeneinander axial unter Abstandsverringerung bewegt. Jedenfalls verfügen die Rohre innerhalb des Rohrpaketes nach wie vor und unverändert über die erforderliche Flexiblität, um eine einfache Verlegung und Handhabung, insbesondere Verbindung mit weiteren Rohren in Längsrichtung, zu ermöglichen.

Meistens kommt zur Herstellung des Abstandhalters ein aufgeschäumter thermoplastischer Kunststoff, beispielsweise Polystyrol (PS), zum Einsatz. Derartige Kunststoffe verfügen über ein geringes spezifisches Gewicht von weniger als 100 kg/m$^3$, insbesondere weniger als 50 kg/m$^3$, so dass das hergestellte Rohrpaket von seinem Gesamtgewicht her problemlos zu handhaben ist, auch und insbesondere dann, wenn der zwischen den Rohren verbleibende Zwischenraum praktisch vollständig von dem Abstandhalter oder den mehreren Abstandhaltern ausgefüllt wird. Denn das äußerst geringe spezifische Gewicht der Abstandhalter sorgt dafür, dass das Gesamtgewicht des solchermaßen konfektionierten Rohrpaketes gegenüber den Einzelrohren praktisch kaum oder nicht nennenswert steigt.

Da aufgeschäumter thermoplastischer Kunststoff, insbesondere Polystyrol, weder wasserlöslich ist noch von Wasser angequollen wird, ist davon auszugehen, dass der betreffende Abstandhalter seiner Funktion auch bei einer Erdverlegung praktisch unbegrenzt nachkommt. Hinzu kommt, dass der Längenänderungskoeffizient mit ca, $0{,}07 \frac{mm}{m \cdot K}$ gering ist. D.h., erst bei einer Temperaturänderung um ca. 17 K tritt eine reversible Maßänderung respektive Längenänderung von 1 mm/m entsprechend 0,1 % auf.

Da die Rohre bzw. die Kabelschutzrohre ausdrücklich nicht fest mit dem Abstandhalter und der Umreifung verbunden sind, also an dem Abstandhalter und der Umreifung verbindungsfrei anliegen, können sich die Rohre und der Abstandhalter unabhängig voneinander und gegeneinander bewegen. Vergleichbares gilt für die Rohre im Vergleich zur Umreifung. Hierzu trägt ergänzend der Umstand bei, dass der Abstandhalter und/oder die Umreifung wenigstens in ihren jeweiligen Berührbereichen mit vergleichbaren Reibwerten wie eine Außenoberfläche der Rohre ausgerüstet sind.

Da die Umreifung in der Regel aus ein oder mehreren Umreifungsbändem zusammengesetzt ist, welche die Rohre inklusive zwischengeschaltetem Abstandhalter außen in Querrichtung umschlingen und im Übrigen vorteilhaft aus Kunststoff gefertigt sind, werden insgesamt Reibungen Kunststoff Kunststoff beobachtet. Das gilt sowohl für das Materialpaar "Rohr-Umreifung", als auch für die Paarung "Rohr-Abstandhalter'. Denn die Rohre sind üblicherweise aus Kunststoff hergestellt und verfügen meistens noch über eine äußere (weiße) Beschichtung, wie dies in der DE 298 07 441 U1 beschrieben ist. D.h., die Außenbeschichtung wird meist aus Polyethylen hergestellt.

Jedenfalls werden in der Regel Reibzahlen von ca. 0,05 oder weniger für die beschriebenen Reibpaare beobachtet, die gewährleisten, dass sich die Rohre (geringfügig) gegenüber dem Abstandhalter hin und herbewegen können. Das Gleiche gilt für Bewegungen der Rohre gegenüber dem einen oder den mehreren Umreifungsbähndern, welche die Rohre inklusive zwischengeschaltetem Abstandhalter außen in Querrichtung umschlingen. Solche Relativbewegungen zwischen den Rohren und dem Abstandhalter einerseits und den Rohren und der Umreifung andererseits werden im Rahmen der Erfindung ausdrücklich zugelassen, und zwar nicht nur, um etwaige Temperatureffekte und unterschiedliche Längenausdehnungen aufzufangen, sondern auch verschiedene Untergrundbeschaffenheiten beim Verlegen. Als Folge hiervon verfügt das erfindungsgemäße Rohrpaket über eine vergleichbare Flexibilität, wie sie schon bisher mit dem in den Zwischenraum eingebrachten Füllsand erreicht wird.

Hinzu kommt, dass der eingesetzte Abstandhalter aus dem aufgeschäumten thermoplastischen Werkstoff, insbesondere Polystyrol, ähnlich elektrisch isolierend wirkt wie Luft. Dies lässt sich im Kern darauf zurückführen, dass Luft mit ca. 98 Vol.% den Hauptbestandteil des aufgeschäumten Kunststoffes darstellt. Schlussendlich wird auch eine besondere biologische Verträglichkeit beobachtet, welche die betreffenden Abstandhalter für den Einsatz im Erdreich prädestiniert. Die besondere Steifigkeit des Werkstoffes kommt dadurch zum Ausdruck, dass die Druckspannung bei ca. 10% Stauchung im Bereich von etwa 200 kPa entsprechend 0,20 N/mm² liegt.

Im Ergebnis werden ein Verfahren und ein Rohrpaket zur Verfügung gestellt, mit deren Hilfe Rohre besonders kostengünstig in der Erde verlegt werden können. Tatsächlich stellt der räumlich ausgedehnte und praktisch den gesamten verbleibenden Zwischenraum zwischen den Rohren im Wesentlichen ausfüllende Abstandhalter sicher, dass bisher erforderliche Verfüllungsmaßnahmen oder auch Verdichtungsmaßnahmen entbehrlich sind. D.h., das Rohrpaket wird in seiner in einer Baugrube verlegten Losgröße herstellerseitig komplett konfektioniert. Vor Ort ist es dann lediglich noch erforderlich, das Rohrpaket in der Baugrube zu verlegen, ggf. mit anderen Rohrpaketen zu verbinden und dann die Baugrube zu schließen.

Etwaige Verfüllungs-, Verdichtungs- oder andere Maßnahmen sind nicht (mehr) erforderlich. In diesem Zusammenhang sorgt der Abstandhalter mit seinem geringen spezifischen Gewicht dafür, dass das Rohrpaket unschwer transportiert werden kann und gegenüber dem Transport der Rohre alleine nicht signifikant mehr Transportvolumen benötigt wird. In der Baugrube und beim anschließenden Betrieb verfügen die Rohre über die erforderliche Flexibilität zueinander und im Vergleich zum Abstandhalter, so dass die Rohre problemlos in Bögen verlegt werden können und sich außerdem Temperaturunterschiede nicht auswirken. Immer sorgt das Zusammenspiel von dem den Zwischenraum zwischen den Rohren ausfüllendem Abstandhalter mit der Umreifung dafür, dass die Rohre ihre Positionen in den außenseitigen Aufnahmen des Abstandhalters und/oder in den Innenaufnahmen des Abstandhalters beibehalten.

Tatsächlich verfügt der Abstandhalter in der Regel über an den Außendurchmesser angepasste außenseitige Aufnahmen und einen zentralen Kern. In diesem Kern mögen darüber hinaus noch Innenaufnahmen vorgesehen werden, in welche die Rohre eingeschoben werden. Es ist aber auch möglich, die Innenaufnahmen so zu realisieren, dass mehrere Abstandhalter im Querschnitt zu einem größeren Abstandhalter zusammengefügt werden. Weil die Rohre in den Außenaufnahmen und/oder den Innenaufnahmen zumindest teilweise formschlüssig gehalten sind, ist davon auszugehen, dass die Rohre nach Herstellung des Rohrpaketes, während des Transportes, beim Verlegen und im anschließenden Betrieb zuverlässig ihre Position zueinander beibehalten. Schlussendlich hat es sich bewährt, wenn der Abstandhalter insgesamt spiegelsymmetrisch zu wenigstens einer Symmetrieebene ausgeführt ist. Dadurch lässt sich das Rohrpaket insgesamt quaderförmig ausbilden. In diesem Zusammenhang sind in der Regel die Rohre so angeordnet und zueinander ausgerichtet, dass sie jeweils ohne Überlapp zueinander platziert sind. Hierin sind die wesentlichen Vorteile zu sehen.

Im Folgenden wird die Erfindung anhand einer lediglich ein Ausführungsbeispiel darstellenden Zeichnung näher erläutert; Es zeigen:

| | |
|---|---|
| Fig. 1 | das erfindungsgemäße Rohrpaket in einer perspektivischen Ansicht, |
| Fig. 2 | den Gegenstand nach Fig. 1 in einer Frontansicht, |
| Fig. 3 | eine abgewandelte Ausführungsform der Fig. 2 und |
| Fig. 4A und 4B | einen Schnitt durch ein Rohrpaket im jeweiligen End- bereich. |

In den Figuren ist ein Rohrpaket dargestellt. Dieses Rohrpaket setzt sich aus einzelnen Rohren 1 zusammen, die im Wesentlichen parallel zueinander und längs verlaufend zu dem Rohrpaket zusammengefasst sind. Bei dem Rohrpaket handelt es sich folglich um eine (lose) Zusammenstellung der Rohre 1, die weder untereinander und auch nicht mit einem Abstandhalter 2 sowie Umreifungsbändern 3 verbunden sind. Gleichwohl sorgt natürlich das Zusammenspiel des Abstandhalters 2 mit den Umreifungsbändern 3 dafür, dass die Rohre 1 eine (lösbare) Zusammenfassung zu dem Rohrpaket erfahren.

Bei den Rohren 1 handelt es sich um Kabelschutzrohre 1, die eine weißfarbige Außenschicht aus beispielsweise Polyethylen aufweisen, was allerdings nicht zwingend ist. Um die Rohre bzw. Kabelschutzrohre 1 in ihrer dargestellten Position zueinander zu halten und das Rohrpaket zu definieren, ist der bereits angesprochene Abstandhalter 2 vorgesehen, welcher zwischen die Rohre 1 zwischengeschaltet ist und über eine verbindungsfreie Ausführung verfügt. D.h., zwischen den Röhren bzw. Kabelschutzrohren 1 und dem Abstandhalter 2 liegt keine mechanische Verbindung vor. Vergleichbares gilt für die Umreifungsbänder 3, die ebenfalls nicht mechanisch mit den Rohren bzw. Kabelschutzrohren 1 gekoppelt sind.

Gleichwohl werden die Rohre respektive Kabelschutzrohre 1 zu dem Rohrpaket zusammengefügt, weil die Umreifungsbänder 3 die einzelnen Rohre 1 an den Abstandhalter 2 anlegen und so die lose Zusammenstellung respektive Zusammenfassung der Rohre 1 definieren. Dabei kann mit Hilfe der Umreifungsbänder 3 der erforderliche Druck auf die Rohre 1 ausgeübt werden. Dies umsomehr, als die Rohre 1 ebenso wie die Umreifungsbänder 3 elastisch ausgestaltet sind.

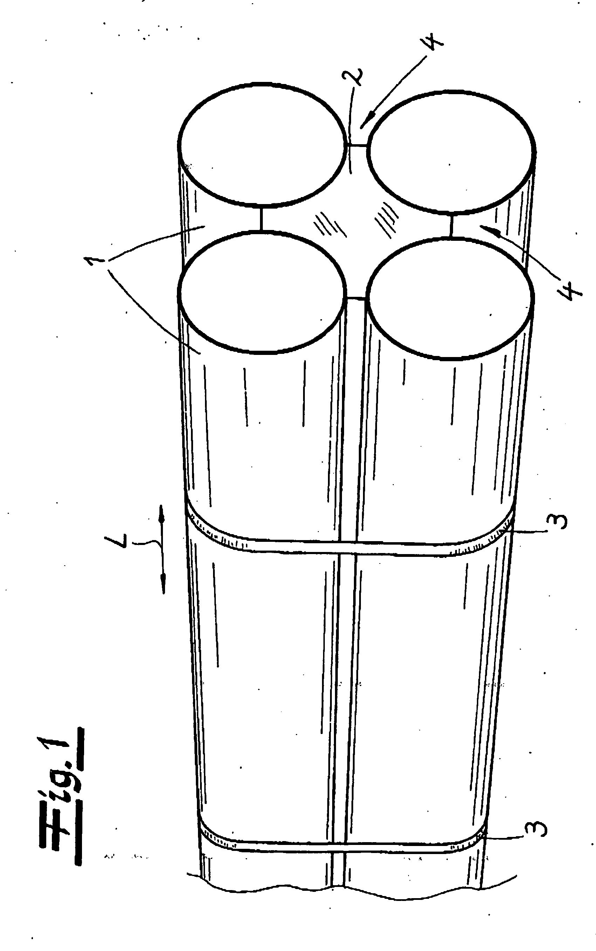

Anhand der Fig. 1 erkennt man, dass der Abstandhalter 2 einen zwischen den Rohren 1 verbleibenden Zwischenraum 4 in Längs- L und Querrichtung Q im Wesentlichen vollständig ausfüllt. Der Abstandhalter 2 ist aus einer frei formbaren Masse gefertigt, besteht im Ausführungsbeispiel aus einem Kunststoff, insbesondere einem amorphen oder teilkristallinen Thermoplast. Tatsächlich kommt ein aufgeschäumter thermoplastischer Kunststoff, insbesondere Polystyrol (PS) zum Einsatz.

Auf diese Weise ist der Abstandhalter 2 im Wesentlichen gegenüber Wasser, Laugen und sogar Säuren beständig und verfügt im Übrigen über ein äußerst geringes spezifisches Gewicht von deutlich unter 100 kg/m$^3$.

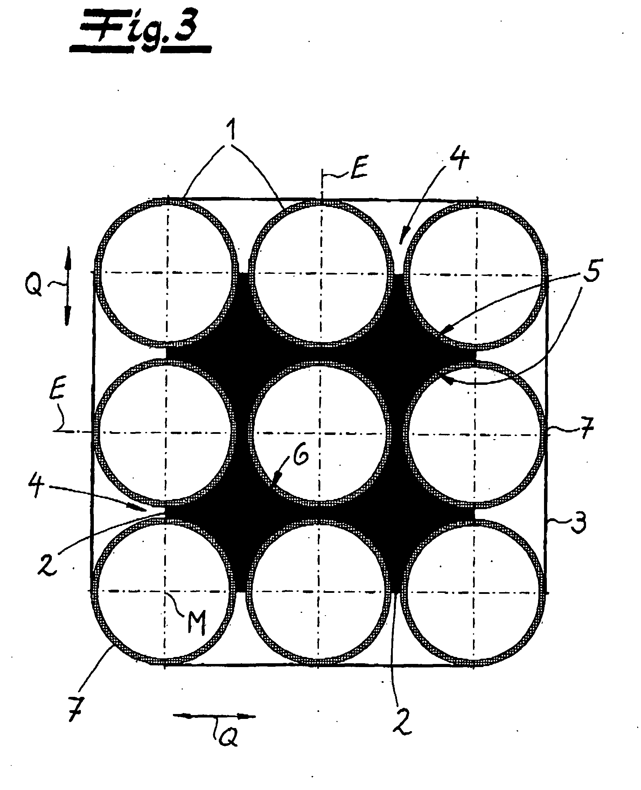

Man erkennt, dass der Abstandhalter 2 mit außenseitigen Aufnahmen 5 ausgerüstet ist, welche an einen Rohraußendurchmesser D der Rohre 1 angepasst sind. Darüber hinaus mögen auch noch Innenaufnahmen 6 ähnlicher Anpassung realisiert sein, wie sie in der Fig. 3 dargestellt sind. Diese Innenaufnahmen 6 können in einem entsprechend geformten Abstandhalter 2 definiert sein, wobei ein Rohr 1 hierin eingesteckt wird. Es ist aber auch möglich, mehrere Abstandhalter 2 so zu einem Gesamtabstandhalter 2 in Querrichtung Q zusammenzufügen, dass insgesamt die Konstellation nach Fg. 3 vorliegt, dann allerdings nicht unter Rückgriff auf einen Abstandhalter 2, sondern auf mehrere in Querrichtung Q zusammengefügte Abstandhalter 2.

Der jeweilige Abstandhalter 2 oder die mehreren Abstandhalter 2 füllen - wie gesagt - den Zwischenraum zwischen den Rohren 1 in Längsrichtung L und Querrichtung Q praktisch vollständig aus, damit beim Einbringen des dargestellten Rohrpaketes in eine Baugrube der Zwischenraum nicht mehr mit beispielsweise Sand oder anderen Materialien ausgefüllt werden muss. Mit Hilfe der Umreifungsbänder 3 bzw. allgemein der Umreifung 3 werden die Rohre 1 an die Aufnahmen 5 bzw. 6 angelegt und wird das Rohrpaket insgesamt definiert. Dabei werden die Rohre 1 jeweils zumindest teilweise formschlüssig in den außenseitigen Aufnahmen bzw. Außenaufnahmen 5 und/oder den Innenaufnahmen 6 des einen oder der mehreren Abstandhalter 2 gehalten.

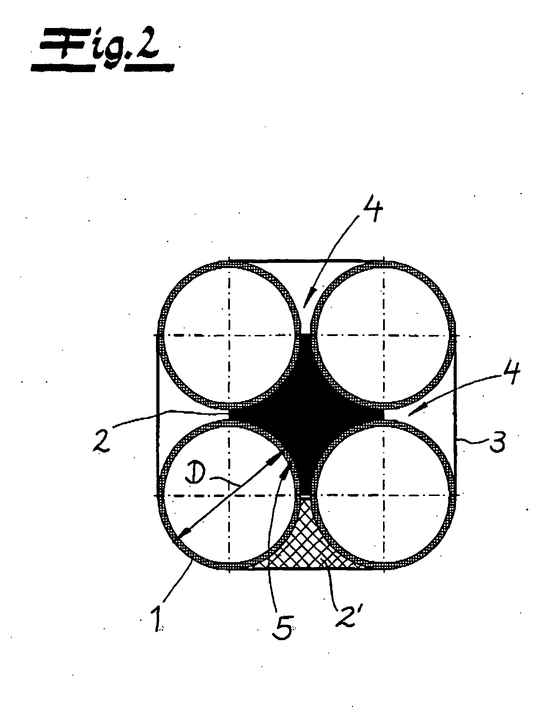

Im Rahmen der Fig. 2 ist ein abgewandelter zusätzlicher Abstandhalter 2' zu erkennen, der vorliegen letztlich die Funktion eines Abstützhalters 2' übernimmt Dieser spezielle Abstandhalter bzw. Abstützhalter 2' wird meistens im bodenseitigen Bereich des Rohrpaketes eingesetzt und dient dazu, etwaige auf das Rohrpaket wirkende Kräfte in eine Sohle in einer Baugrube problemlos einzuleiten. Auf diese Weise wird das Rohrpaket wenigstens bodenseitig geschlossen und definiert in diesem Bodenbereich in Verbindung mit dem besagten Abstützhalter 2' eine insgesamt mehr oder minder geschlossene Bodenfläche, die unmittelbar auf der Sohle der besagten Baugrube aufliegt und auch aufliegen kann. Dadurch lassen sich etwaige auf das Rohrpaket einwirkende Kräfte von oben vollflächig auf die Sohle übertragen.

Insgesamt ist die Auslegung so getroffen, dass das Rohrpaket über eine quaderförmige Gestalt verfügt. Die Rohre 1 sind jeweils in Reihen und in Längsrichtung angeordnet, d.h., ohne Überlapp zueinander. Der jeweilige Abstandhalter 2 verfügt über eine spiegelsymmetrische Ausgestaltung im Vergleich zu wenigstens einer Symmetrieebene E. Meistens ist der Abstandhalter 2 im Vergleich zu zwei Spiegelebenen E symmetrisch ausgelegt (vgl. Fig. 3).

Da die Rohre 1 im Ausführungsbeispiel zylindrisch ausgelegt sind, verfügen auch die Außenaufnahmen 5 über eine kreisbogenförmige Gestalt. Tatsächlich beschreiben die Außenaufnahmen 5 im dargestellten Beispiel jeweils einen Viertelkreisbogen oder einen Halbkreisbogen, was selbstverständlich nicht einschränkend zu verstehen ist. Auf diese Weise wird das jeweilige Rohr 1 zum einen mit einem Viertelkreisbogen in der zugehörigen Außenaufnahme 5 formschlüssig aufgenommen bzw. abgestützt und zum anderen ebenfalls über einen Viertelkreisbogen von dem Umreifungsband 3 gehalten. Man erkennt, dass sich die Außenaufnahme 5 und ein Haltebogen 7 des Umreifungsbandes 3 diametral im Vergleich zum Rohrmittelpunkt M gegenüberliegen. Dadurch wird eine besonders günstige Krafteinleitung in die jeweils im Eckbereich des Rohrpaketes angeordneten Rohre 1 erreicht (vgl. Fig. 3).

Die Rohre 1, welche sich in den Wandbereichen des Rohrpaketes befinden, werden demgegenüber in halbkreisförmigen außenseitigen Aufnahmen 5 gehalten, erfahren also durch den Abstandhalter 2 eine Unterstützung und Halterung über ihren halben Durchmesser. Auch in diesem Fall sorgt das Umreifungsband 3 dafür, dass eine das Rohr 1 haltende Kraft gegenüberliegend der Aufnahme 5 angreift, und zwar an einem Haltebogen 7, welcher erneut diametral im Vergleich zum Mittelpunkt bzw. Rohrmittelpunkt M des zugehörigen Rohres 1 im Vergleich zur Aufnahme 5 angeordnet ist. Der Haltebogen 7 ist bei den betreffenden Rohren 1 im Wandbereich jedoch deutlich kürzer als ein Viertelbogen gestaltet, was an dieser Stelle kein Problem darstellt, weil das betreffende Rohr 1 in der halbkreisförmigen Aufnahme 5 im Abstandhalter 2 gehalten wird (vgl. Fig. 3).

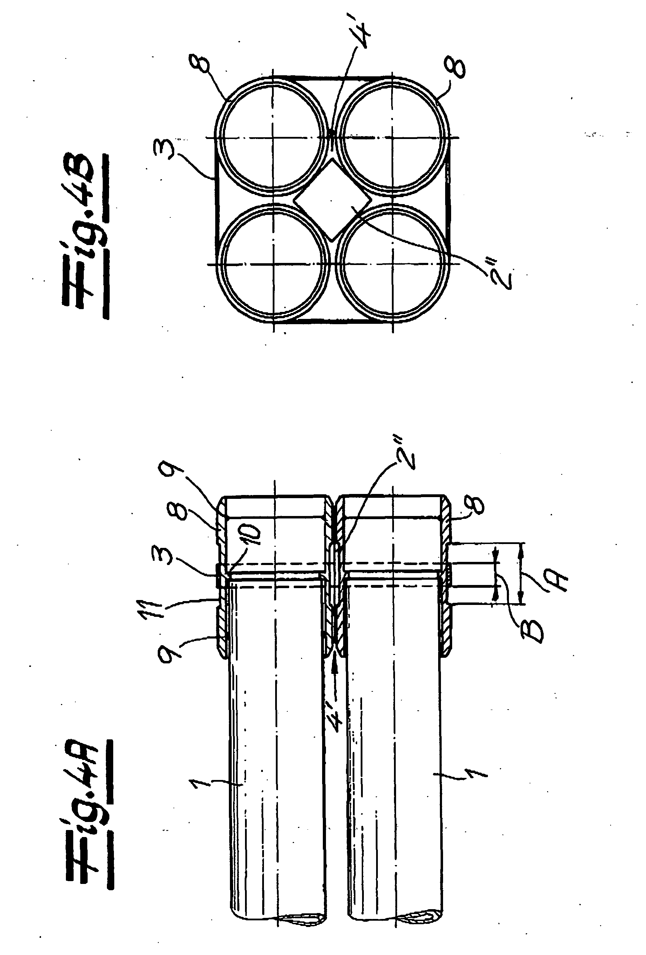

Im Rahmen der Fig. 4A ist das aus den Rohren 1 hergestellte Rohrpaket in teilweise seitlichem Schnitt gezeigt. Man erkennt, dass im Anlieferungszustand regelmäßig die jeweiligen Rohre 1 eine aufgesteckte Muffe 8 aufweisen. Diese Muffe bzw. Steckmuffe 8 ist meistens einendseitig auf das jeweilige Rohr 1 aufgesteckt, findet sich also an nur einem Ende des Rohres 1, um eine problemlose Verbindung der einzelnen Rohre 1 zu einem längs erstreckten Kabelrohr zu ermöglichen.

Die Steckmuffe 8 verfügt in ihrem Innem über zwei Umfangsdichtungen 9 und einen größtenteils mittigen Anschlag 10. Bis zu diesem Anschlag 10 werden die jeweils zu verbindenden Rohre 1 in die Muffe bzw. Steckmuffe 8 in axialer Richtung bzw. in Längsrichtung L eingesteckt. Das ist möglich, weil die Rohre 1 selbst im Rohrpaket noch flexibel und beweglich gehalten werden und sich in axialer Richtung bzw. Längsrichtung L bei Bedarf verschieben lassen.

Die jeweils einendseitig an die Rohre 1 des Rohrpaketes angeschlossenen Muffen respektive Steckmuffen 8 werden erfindungsgemäß zusammengefasst, und zwar erneut mit Hilfe eines Umreifungsbandes 3. Zu diesem Zweck ist die jeweilige Muffe bzw. Steckmuffe 8 mit einer Ausnehmung 11 in etwa mittig an ihrem Außenumfang ausgerüstet Das jeweilige Umreifungsband 3 greift nun in diese Ausnehmung 11 ein (vgl. Fig. 4A).

Dabei ist die Auslegung so getroffen, dass die axiale Länge A dieser Ausnehmung 10 eine Breite B des Umreifungsbandes 3 überschreitet. Regelmäßig gilt A > B und meistens sogar A > 2B.

Auf diese Weise ist sichergestellt, dass die endseitig des Rohrpaketes vorhandenen Muffen 8 einerseits eine gegenseitige Zentrierung erfahren und andererseits das die Muffen 8 zentrierende Umreifungsband 3 in axialer Richtung bzw. in Längsrichtung L rutschen kann, um die axiale Verbindung einzelner Rohre 1 mit Hilfe der jeweiligen Muffe 8 problemlos zuzulassen. Denn das Umreifungsband 3 kann im Bereich der Muffen 8 um einen gewissen Betrag in axialer Richtung hin- und herrutschen.

Schließlich erkennt man noch anhand der Fig. 4B, dass ein etwaiger Zwischenraum 4' zwischen den Muffen respektive Steckmuffen 8 erfindungsgemäß durch weitere speziell geformte Abstandhalter 2" ausgefüllt werden kann, die eine von den Abstandhaltern 2 abweichende Form und Gestaltung besitzen mögen. Tatsächlich sind diese Abstandhalter 2" überwiegend prismatisch gestaltet, was allerdings nur beispielhaft zu verstehen ist

**Patentansprüche**

1. Verfahren zur Herstellung eines Rohrpaketes aus einzelnen Rohren (1), insbesondere Kabelschutzrohren (1), wonach die Rohre (1) längs verlaufend mittels zumindest eines zwischengeschalteten Abstandhalters (2) verbindungsfrei zusammengefasst und zusätzlich außenumfangseitig umreift werden, **dadurch gekennzeichnet, dass** der räumlich ausgedehnte Abstandhalter (2) aus einem aufgeschäumten thermoplastischen Kunststoff hergestellt wird und einen zwischen den Rohren (1) verbleibenden Zwischenraum in Längsrichtung (L) und Querrichtung (Q) im Wesentlich vollständig ausfüllt.

2. Verfahren nach Anspruch 1, **dadurch gekennzeichnet, dass** oder Abstandhalter (2) aus einer frei formbaren Masse gefertigt wird.

3. Verfahren nach Anspruch 1 oder 2, **dadurch gekennzeichnet, dass** zur Herstellung des Abstandhalters (2) ein Kunststoff, insbesondere ein amorpher oder teilkristalliner Thermoplast, eingesetzt wird.

4. Verfahren nach einem der Ansprüche 1 bis 3, **dadurch gekennzeichnet,** dass für den Abstandhalter (2) ein gegenüber Wasser, aber auch Laugen und sogar Säure beständiger Werkstoff zu seiner Herstellung eingesetzt wird.

5. Verfahren nach einem der Ansprüche 1 bis 4, **dadurch gekennzeichnet, dass** der Abstandhalter mit an den Rohraußendurchmesser (D) angepassten außenseitigen Aufnahmen (5) und einem zentralen Kern ausgerüstet wird.

6. Rohrpaket aus einzelnen Rohren (1), insbesondere Kabelschutzrohren (1), wobei die Rohre (1) längs verlaufend zueinander mittels zumindest eines zwischengeschalteten Abstandshalters (2) verbindungsfrei zusammengefasst sind, und wobei eine zusätzliche außenumfangsseitige Umreifung (3) vorgesehen ist, **dadurch gekennzeichnet, dass** der räumlich ausgedehnte Abstandhalter (2) aus einem aufgeschäumten thermoplastischen Kunststoff hergestellt ist und eine zwischen den Rohren (1) verbleibenden Zwischenraum in Längsrichtung (L) und Querrichtung (Q) im Wesentlichen vollständig ausfüllt.

7. Rohrpaket nach Anspruch 6, **dadurch gekennzeichnet, dass** ein oder mehrere Abstandhalter (2) in Längsrichtung (L) der Rohre (1) realisiert sind.

8. Rohrpaket nach Anspruch 6 oder 7, **dadurch gekennzeichnet, dass** der Abstandhalter (2) außenseitige Aufnahmen (5) und/oder Innenaufnahmen (6) zur Festlegung der Rohre (1) aufweist.

9. Rohrpaket nach einem der Ansprüche 6 bis 8, **dadurch gekennzeichnet, dass** der Abstandhalter (2) ein geringes spezifisches Gewicht von unter 100 $kg/m^3$ aufweist.

10. Rohrpaket nach einem der Ansprüche 6 bis 9, **dadurch gekennzeichnet, dass** der Abstandhalter (2) aus Polystyrol (PS) hergestellt ist.

11. Rohrpaket nach einem der Ansprüche 6 bis 10, **dadurch gekennzeichnet, dass** sich die Umreifung (3) aus einem oder mehreren Umreifungsbändern (3) zusammensetzt, welche die Rohre (1) inklusive zwischengeschaltetem Abstandhalter (2) außen in Querrichtung (Q) umschlingen.

12. Rohrpaket nach einem der Ansprüche 6 bis 11, **dadurch gekennzeichnet, dass** die Rohre (1) in den außenseitigen Aufnahmen (5) und/oder Innenaufnahmen (6) zumindest teilweise formschlüssig gehalten sind.

13. Rohrpaket nach einem der Ansprüche 6 bis 12, **dadurch gekennzeichnet, dass** der Abstandhalter (2) und/oder die Umreifung (3) wenigstens in ihren Berührbereichen mit den Rohren (1) vergleichbare Reibwerte wie eine Außenoberfläche der Rohre (1) aufweisen.

**14.** Rohrpaket nach einem der Ansprüche 6 bis 13, **dadurch gekennzeichnet, dass** der Abstandhalter (2) spiegelsymmetrisch zu wenigstens einer Symmetrieebene (E) ausgebildet ist.

**15.** Rohrpaket nach einem der Ansprüche 6 bis 14, **dadurch gekennzeichnet, dass** es insgesamt quaderförmig ausgebildet ist, wobei die Rohre (1) jeweils in Reihen ohne Überlapp zueinander angeordnet sind.

**Claims**

**1.** A method for manufacturing a conduit packet comprised of individual conduits (1), in particular cable conduits (1), in which the conduits (1) are loosely bundled over their length by at least one interspersed spacer (2) and additionally strapped around their outer circumference, **characterized in that** the spatially lengthened spacer (2) is made out of a foamed thermoplastic, and essentially completely fills out a gap remaining between the conduits (1) in the longitudinal direction (L) and transverse direction (Q).

**2.** The method according to claim 1, **characterized in that** the spacer (2) is made out of a freely moldable material.

**3.** The method according to claim 1 or 2, **characterized in that** a plastic, in particular an amorphous or partially crystalline thermoplastic, is used for manufacturing the spacer (2).

**4.** The method according to one of claims 1 to 3, **characterized in that** a material resistant to water, but also to lye and even acid, is used for the spacer (2) in its manufacture.

**5.** The method according to one of claims 1 to 4, **characterized in that** the spacer is equipped with outer receptacles (5) tailored to the conduit outer diameters (D) and a central core.

**6.** A conduit packet comprised of individual conduits (1), in particular cable conduits (1), wherein the conduits (1) are loosely bundled over their length by at least one interspersed spacer (2), and wherein an additional strap (3) is provided around their outer circumference, **characterized in that** the spatially lengthened spacer (2) is made out of a foamed thermoplastic, and essentially completely fills out a gap remaining between the conduits (1) in the longitudinal direction (L) and transverse direction (Q).

**7.** The conduit packet according to claim 6, **characterized in that** one or more spacers (2) are realized in the longitudinal direction (L) of the conduits (1).

**8.** The conduit packet according to claim 6 or 7, **characterized in that** the spacer (2) exhibits outer receptacles (5) and/or inner receptacles (6) for securing the conduits (1).

**9.** The conduit packet according to one of claims 6 to 8, **characterized in that** the spacer (2) exhibits a low specific weight of under 100 kg/m$^3$.

**10.** The conduit packet according to one of claims 6 to 9, **characterized in that** the spacer (2) is made out of polystyrene (PS).

**11.** The conduit packet according to one of claims 6 to 10, **characterized in that** the strap (3) consists of one or more strapping bands (3), which outwardly loop around the conduits (1) including interspersed spacer (2) in a transverse direction (Q).

**12.** The conduit packet according to one of claims 6 to 11, **characterized in that** the conduits (1) are held at least in part positively in the outer receptacles (5) and/or inner receptacles (6).

**13.** The conduit packet according to one of claims 6 to 12, **characterized in that** at least the portions of the spacer (2) and/or strap (3) that come into contact with the conduits (1) exhibit coefficients of friction comparable to an outer surface of the conduits (1).

**14.** The conduit packet according to one of claims 6 to 13, **characterized in that** the spacer (2) is designed mirror-symmetrical to at least one plane of symmetry (E).

**15.** The conduit packet according to one of claims 6 to 14, **characterized in that** it has an overall cuboid shape, wherein the conduits (1) are each allocated in rows relative to each other without overlap.

**Revendications**

**1.** Procédé pour fabriquer un ensemble de tuyaux constitué de tuyaux (1) individuels, en particulier des tuyaux de protection de câble (1), les tuyaux (1) étant regroupés sans liaison, agencés dans le sens longitudinal, au moyen d'au moins un écarteur (2) intercalé et étant enveloppés en supplément côté pourtour extérieur, **caractérisé en ce que** l'écarteur (2) étendu dans l'espace est fabriqué à base d'un plastique thermoplastique moussé dessus et remplit sensiblement complètement un espace intermédiaire restant entre les tuyaux (1) dans le sens longitudinal (L) et dans le sens transversal (Q).

**2.** Procédé selon la revendication 1, **caractérisé en ce que** l'écarteur (2) est fabriqué à partir d'une mousse pouvant être moulée librement.

3. Procédé selon la revendication 1 ou 2, **caractérisé en ce qu'**on utilise un plastique, en particulier un thermoplastique amorphe ou semi-cristallin, pour fabriquer l'écarteur (2).

4. Procédé selon l'une des revendications 1 à 3, **caractérisé en ce que**, pour l'écarteur (2), on utilise un matériau résistant à l'eau, mais également à des solutions alcalines et même de l'acide pour sa fabrication.

5. Procédé selon l'une des revendications 1 à 4, **caractérisé en ce que** l'écarteur est équipé de logements (5) côté extérieur, adaptés au diamètre extérieur de tuyau (D), et d'un noyau central.

6. Ensemble de tuyaux constitué de tuyaux (1) individuels, en particulier de tuyaux de protection de câble (1), les tuyaux (1) étant regroupés sans liaison, agencés dans le sens longitudinal, les uns par rapport aux autres, au moyen d'au moins un écarteur (2) intercalé, un enveloppement (3) supplémentaire, côté pourtour extérieur, étant prévu, **caractérisé en ce que** l'écarteur (2) étendu dans l'espace est fabriqué à base d'un plastique thermoplastique moussé dessus et remplit pratiquement complètement un espace intermédiaire restant entre les tuyaux (1) dans le sens longitudinal (L) et dans le sens transversal (Q).

7. Ensemble de tuyaux selon la revendication 6, **caractérisé en ce qu'**un ou plusieurs écarteurs (2) sont réalisés dans le sens longitudinal (L) des tuyaux (1).

8. Ensemble de tuyaux selon la revendication 6 ou 7, **caractérisé en ce que** l'écarteur (2) présente des logements (5) côté extérieur et/ou des logements intérieurs (6) pour la fixation des tuyaux (1).

9. Ensemble de tuyaux selon l'une des revendications 6 à 8, **caractérisé en ce que** l'écarteur (2) présente un poids spécifique faible inférieur à 100 kg/m$^3$.

10. Ensemble de tuyaux selon l'une des revendications 6 à 9, **caractérisé en ce que** l'écarteur (2) est à base de polystyrène (PS).

11. Ensemble de tuyaux selon l'une des revendications 6 à 10, **caractérisé en ce que** le cerclage (3) se compose d'une ou de plusieurs bandes de cerclage (3), lesquelles entourent les tuyaux (1), y compris l'écarteur (2) intercalé, à l'extérieur dans le sens transversal (Q).

12. Ensemble de tuyaux selon l'une des revendications 6 à 11, **caractérisé en ce que** les tuyaux (1) sont maintenus au moins en partie par complémentarité de forme dans les logements (5) côté extérieur et/ou les logements intérieurs (6).

13. Ensemble de tuyaux selon l'une des revendications 6 à 12, **caractérisé en ce que** l'écarteur (2) et/ou le cerclage (3) présente(nt), au moins dans leurs zones de contact avec les tuyaux (1), des valeurs de frottement comparables à une surface extérieure des tuyaux (1).

14. Ensemble de tuyaux selon l'une des revendications 6 à 13, **caractérisé en ce que** l'écarteur (2) est conçu avec une symétrie spéculaire par rapport à au moins un plan de symétrie (E)

15. Ensemble de tuyaux selon l'une des revendications 6 à 14, **caractérisé en ce qu'**il est conçu globalement avec une forme carrée, les tuyaux (1) étant disposés à chaque fois dans des rangées sans chevauchement les uns par rapport aux autres.

Fig.1

# Fig.2

# *Fig.3*

EP 2 184 824 B1

Fig.4B

Fig.4A

12

**EP 2 184 824 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 29807441 U1
- DE 29724702 U1
- DE 3308482 A1
- US 1818922 A
- US 1799672 A
- DE 2701209
- DE 20102174 U1